Europäisches Patentamt

European Patent Office

Office européen des brevets

(19)

(11) EP 0 942 269 A1

(12) **EUROPEAN PATENT APPLICATION**

(43) Date of publication:
15.09.1999 Bulletin 1999/37

(51) Int Cl.⁶: **G01J 5/08**

(21) Application number: **99300269.0**

(22) Date of filing: **15.01.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.03.1998 GB 9805110**

(71) Applicant: **Land Instruments International Limited**
**Dronfield, Sheffield S18 6DJ (GB)**

(72) Inventor: **Ridley, Ian Hamilton**
**Sheffield S8 8QU (GB)**

(74) Representative: **Skone James, Robert Edmund**
**GILL JENNINGS & EVERY**
**Broadgate House**
**7 Eldon Street**
**London EC2M 7LH (GB)**

(54) **Radiation sensing apparatus**

(57)    Radiation sensing apparatus comprises a substantially hyperbolically shaped radiation reflector (13) including an aperture (15) which faces a target (20) surface in use. The reflector (13) including an aperture; and, an apparatus (11) for detecting the radiation transmitted through the aperture (15), wherein the surface profile of the hyperbolic reflector is selected in accordance with the distance of the aperture from the target.

Figure 1

## Description

The present invention relates to radiation sensing apparatus for determining the temperature of a target body.

Infrared thermometers operate by monitoring the amount of infrared radiation emitted by a target body and determining from this the temperature of the body itself. For a perfect "black body", the amount of infrared radiation emitted depends on the body's temperature and surface area. However, in reality theoretical "black body" emission is never achieved as a percentage of the infrared radiation generated by the body is reflected from the boundary between the surface of the body and the surrounding medium, and reabsorbed.

This reduction in the amount of radiation emitted is represented by a factor known as the body's emissivity which indicates the ratio of radiation emitted by the actual body compared to that of a theoretically perfect "black body".

For bodies which have a low emissivity, for example bodies having highly reflective surfaces, the amount of infrared radiation emitted for any given temperature is small. Obviously, this can result in the total emitted infrared radiation being low compared to the levels of background radiation and it therefore becomes difficult to determine the temperature of the body.

In order to overcome this problem, it is useful to effectively increase the relative emissivity of the target body whose temperature is to be sensed. In the prior art, this has been achieved with an emissivity enhancing reflector placed in contact with or very close to the surface of the target body whose temperature is to be sensed. The emissivity enhancing reflector is a hemisphere of reflective material that is located around a target body whose temperature is to be determined. The target body is located at the focal point of the hemispherical reflector such that any radiation emitted from the target is reflected back from the hemisphere directly at the target body. This reflected radiation is then partially absorbed and partially reflected by the target body. Accordingly, some of the reflected infrared radiation will be incident through an aperture onto the infrared thermometer. As the thermometer is now able to detect reflected radiation that would previously have been undetected, the effective emissivity of the body is increased.

However, such apparatus suffers from the drawback that the effectiveness of the emissivity enhancing reflector is vastly reduced if the target body is not located at the focal point of the reflecting hemispherical surface.

In accordance with one aspect of the present invention we provide radiation sensing apparatus comprising a substantially hyperbolically shaped radiation reflector including an aperture which faces a target surface in use; and, an apparatus for detecting the radiation transmitted through the aperture, wherein the surface profile of the hyperbolic reflector is selected in accordance with the distance of the aperture from the target.

In accordance with a second aspect of the present invention, a method of monitoring radiation emitted by a target comprises providing apparatus according to the first aspect of the invention; and locating the reflector relative to the target so that radiation emitted by the target is reflected towards the aperture.

The present invention utilises an emissivity enhancing reflector having a substantially hyperbolic profile. For a hyperbolic reflector, there is no specific focal point at which radiation emitted from the target body will be focused. Instead, the radiation will be focused into a region. Accordingly, motion of the target body towards and away from the reflector, within the focal region, will not result in a loss in the level of increased relative emissivity.

In use, the exact shape of the hyperbola is chosen depending on the distance from the reflector aperture to the target body. This ensures that the target body will be located in the focal region of the reflector, ensuring maximum emissivity enhancement. Furthermore, the reflector need not have a precise hyperbolic shape. Approximations to the hyperbolic form are also possible. For example, a shape formed by linking a spherical surface to a conical surface where the two meet at a tangent could also be used.

In some examples, the aperture is aligned with the optical axis of the reflector. However, this means that some radiation emitted by the target does not undergo any reflection by the reflector and passes unreflected through the aperture and thus is not subject to enhancement. Preferably, therefore, the aperture is offset from the optical axis of the reflector.

In the preferred example, the optical axis of the reflector is normal to the target surface but in some cases, the reflector may be arranged with its optical axis offset to a normal to the target surface. This provides an improvement in performance when the target surface is highly specular.

Preferably, the hyperbolic reflector further comprises a flange mounted to the reflector perimeter as this provides improved suppression of background radiation.

Typically the detecting apparatus is an infrared thermometer which is sensitive to infrared radiation, although any apparatus suitable for determining temperature at any suitable wavelength could be used.

The apparatus may further comprise a coupling tube for removably mounting the radiation reflector to the thermometer, wherein the radiation transmitted through the aperture passes through the coupling tube. This allows the radiation reflector to be easily removed and replaced with a reflector having an alternative profile, thereby ensuring that the optimum reflector profile is readily available.

Preferably, the apparatus further comprises a fibre optic guide for collecting radiation passing through the aperture and conveying the radiation to the detecting apparatus located remotely from the reflector.

Examples of the present invention will now be described with reference to the accompanying drawings in which:-

Figure 1 shows a first example of an infrared thermometer and an emissivity enhancing reflector according to the present invention;
Figure 2 shows a second example of an infrared thermometer and an emissivity enhancing reflector according to the present invention;
Figure 3 shows an emissivity enhancing reflector according to the present invention coupled to a remotely placed detection system;
Figure 4 shows a graph representing the relative emissivity enhancement of different shaped reflectors;
Figure 5 is a schematic side view of a third example with just the reflector and target being shown;
Figure 6 is a view similar to Figure 5 but of a fourth example;
Figure 7 is a view similar to Figure 5 but of a fifth example; and,
Figure 8 illustrates graphically the performance of a number of reflectors of the type shown in Figure 5.

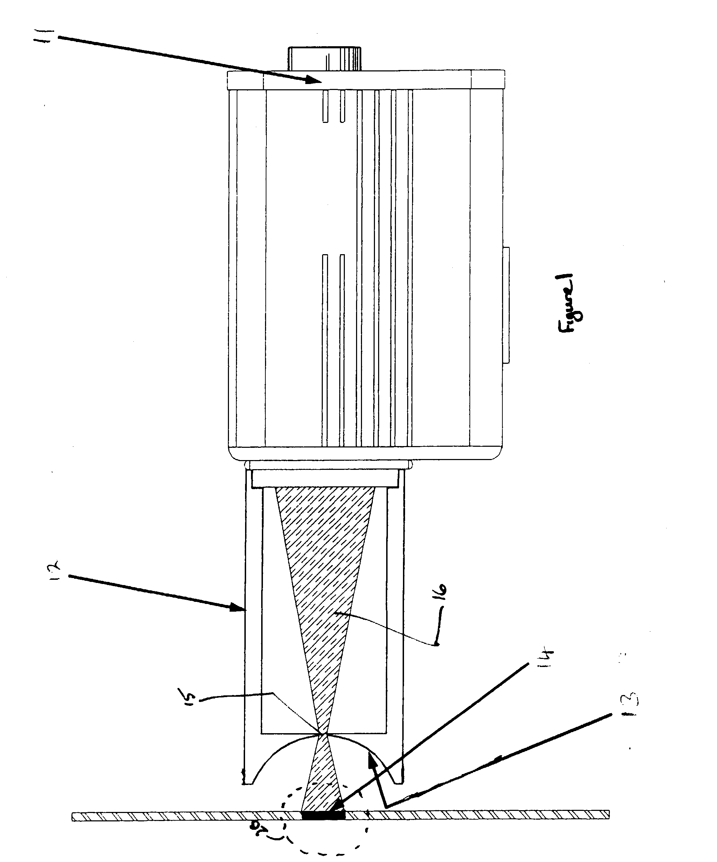

The first example of the present invention shown in Figure 1 comprises a conventional infrared thermometer 11 coupled via a sight tube 12 to a hyperbolic emissivity enhancing reflector 13. The hyperbolic reflector 13 includes an aperture 15 through which infrared radiation 16 is able to pass.

The hyperbolic reflector 13 of the present invention has a surface with a hyperbolic profile which satisfies the equation:

$$\frac{X^2}{a^2} + \frac{(Y^2+Z^2)}{a^2(1-e^2)} = 1$$

where:

X, Y, Z form a cartesian based coordinate system;
e is the eccentricity of the hyperbolic surface, where e>1; and,
a is a constant.

In use, infrared radiation emitted by a target body 14 is reflected from the surface of the hyperbolic reflector 13 back toward the target body 14. Due to the nature of the hyperbolic surface, this radiation will be reflected into a region 20.

The form of the hyperbolic profile is determined, as described below, such that the target body will be located within the focal region 20. This ensures that at least some of the radiation emitted from the target body 14 is reflected from the hyperbolic reflector 13 back toward the target body 14. Accordingly, the target body 14 does not need to be located at a specific point with respect to the emissivity enhancing reflector but anywhere within the focal region 20.

Once the radiation has been reflected back onto the target body 14, the radiation is either absorbed or reflected. A percentage of this reflected radiation will pass through aperture 15 in addition to the radiation emitted directly from the target body 14. This radiation impinges on a sensing element (not shown) of the thermometer 11 which uses the received radiation to determine an indication of the temperature of the target body 15.

In order to determine the shape of the hyperbolic surface to be used, it is necessary to first determine the approximate distance at which the target body 14 will be situated from the aperture. From this value, typically 30mm, it is then possible to calculate a hyperbola which will have a focal region 20 encompassing this approximate location. Thus, even if the target body 14 is not located exactly at the approximate distance, the use of the hyperbolic surface will ensure that at least some of the emitted radiation is reflected back to the target body 14 as required.

Whilst it is possible to recalculate a hyperbola each time the thermometer is to be used, it is preferable to have a predetermined set of hyperbolic reflectors 13, each having a predetermined parabolic profile, with each different profile corresponding to a respective set of aperture to target body distances. Accordingly, once the approximate distance of the target body 14 from the aperture 15 is known, the preferred hyperbolic reflector 13 can simply be selected and mounted to the thermometer 11.

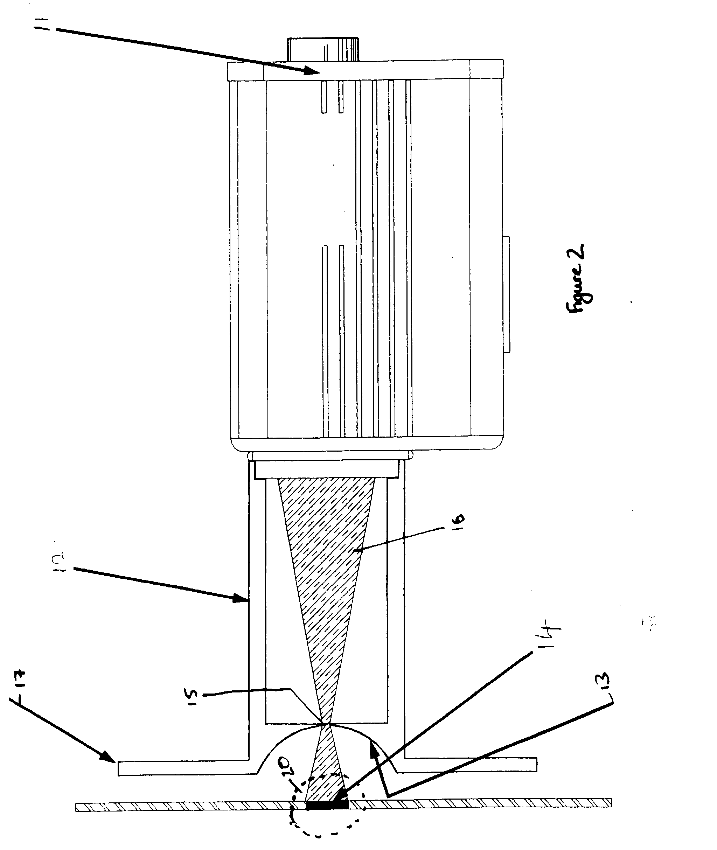

A second example of the invention is shown in Figure 2, in which the apparatus of Figure 1 further includes a reflector flange 17. The reflector flange 17 is mounted to the hyperbolic reflector and acts to reduce the quantity of background radiation which is able to enter the region 20 and hence enter the aperture 15. Consequently, the reflector flange 17 helps reduce the effect of background radiation thus further enhancing the effectiveness of the emissivity enhancing reflector 13.

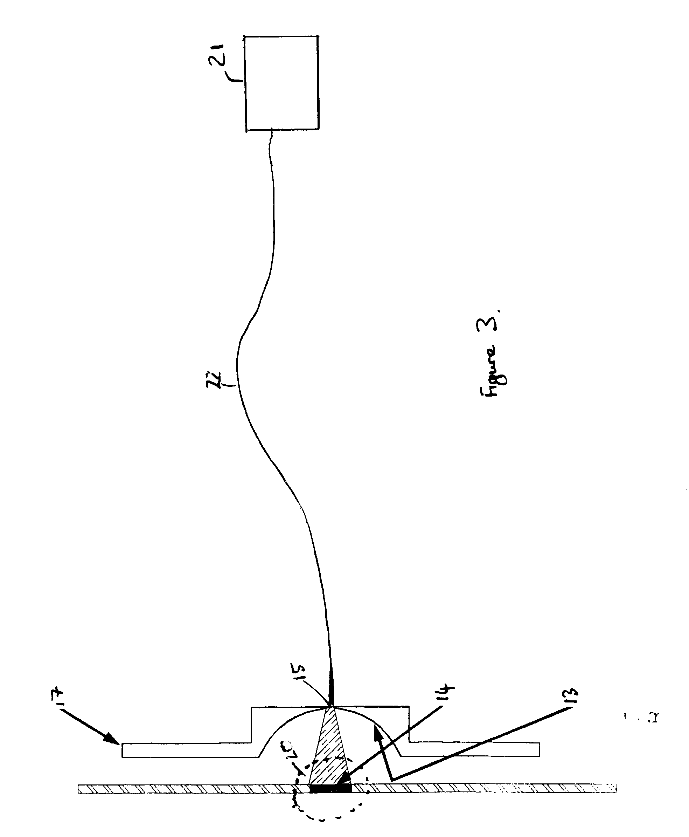

A third example of an emissivity enhancing reflector according to the present invention is shown in Figure 3. In this example, the apparatus of Figure 2 is modified by the removal of the sight tube 12 and the infrared thermometer 11. These are replaced by a fibre optic cable 22 and remotely positioned infrared sensing apparatus 21 (similar to the thermometer 11). Accordingly, infrared radiation emitted by the target body 20 passes through the aperture 15 and into the fibre optic cable 22. It is then transmitted to the remote infrared sensing apparatus 21 which acts in a similar manner to the infrared thermometer. This allows the emissivity enhancing reflector 13 to be located away from the infrared sensing apparatus.

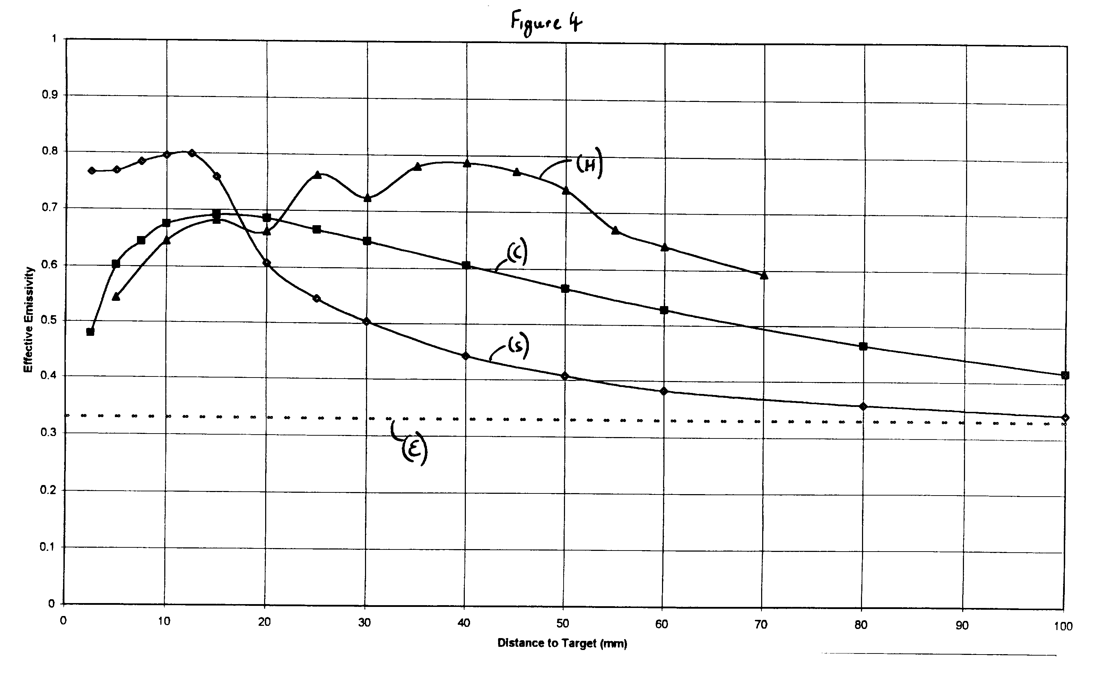

Figure 4 is a graph representing the variations in the effective emissivity of a target body, compared to the actual emissivity of the target body, against the distance to the target body. The effective emissivity is a measure of the emissivity that the body effectively has when the temperature measurement is carried out in the presence of the emissivity enhancing reflector. As a comparison the actual emissivity which represents the emissivity when the measurement is carried out without the emissivity enhancing reflector, is also shown as the dotted line (E).

As shown, for the hemispherical shaped emissivity enhancing reflector(S), as the distance of the target body from the reflecting surface increases, the relative emissivity declines sharply. In contrast to this, for a cone (C) the initial relative emissivity is lower although it remains relatively stable independent of the distance of the body from the reflective surface. However, for the hyperbolic shaped emissivity reflector (H) of the present invention, the relative emissivity is high and remains so for a large variation in distance of the target body from the reflective surface.

In the examples described above, the reflector 13 was arranged with its optical axis normal to the target surface 20 and with the aperture 15 centred on the optical axis. One drawback of this arrangement is that if the target 20 is highly specularly reflective, some radiation will pass through the aperture 15 without enhancement. This can be best understood by considering a beam of radiation which is directed towards the target through the aperture 15. This will impinge normally on the target surface and so a large proportion of the incoming radiation will be reflected back through the aperture.

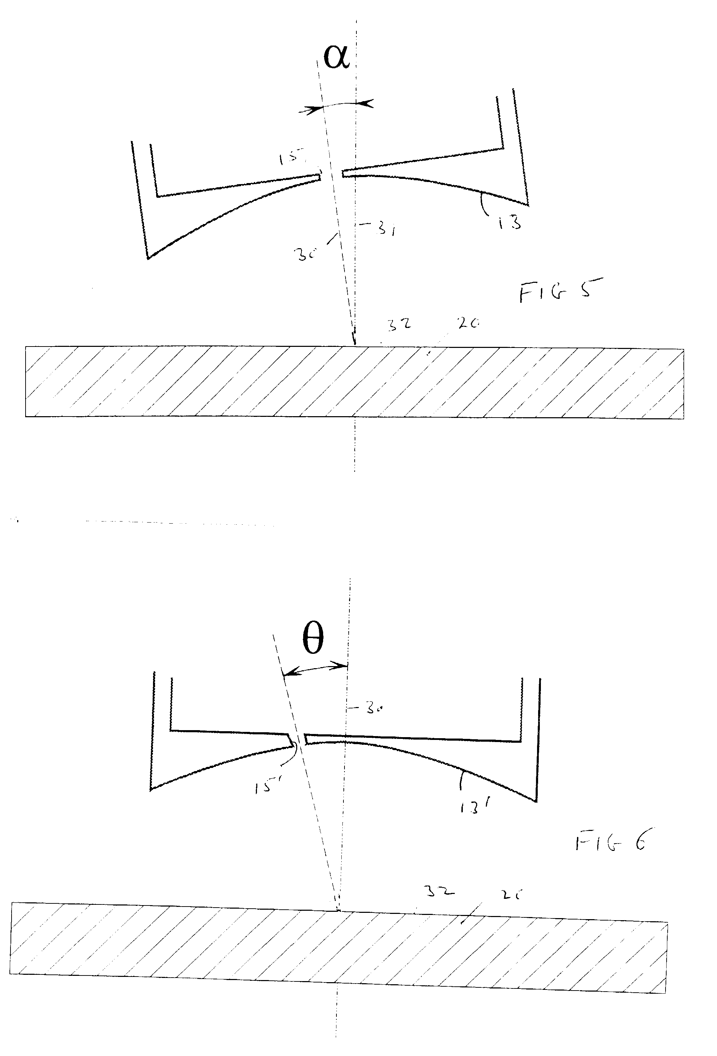

Figure 5 illustrates a modified example in which the reflector 13 is tilted slightly to one side. Thus, the optical axis 30 of the reflector 13 is at an angle $\alpha$ to a surface 32 of the target 20. The aperture 15 remains centered on the optical axis 30. As will be shown below, we have found that this produces acceptable results although there is a small reduction in clearance between the reflector 13 and the target 20.

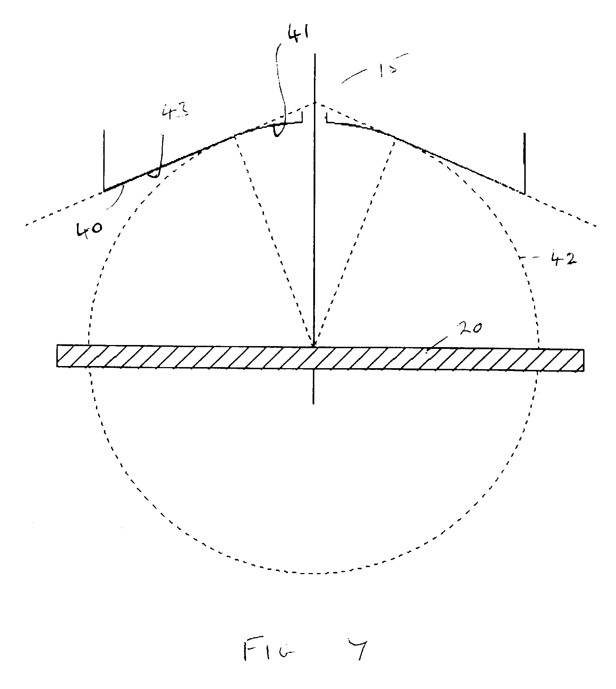

Figure 6 illustrates a further example in which a reflector 13' is provided which has its optical axis 30 normal to the surface 32 of the target 20 and thus maintains maximum clearance. However, an aperture 15' is provided which is offset by an angle $\theta$ to the optical axis 30.

In all the examples described so far, the surface of the reflector 13 is defined as a pure hyperbola. However, approximations to a true hyperbolic form are also possible and an example of such a surface is shown in Figure 7. In this case, a reflector 40 is provided with a central portion 41 forming a part of a sphere shown in dashed lines 42 and an outer conical portion 43 coincident with a conical surface which touches the spherical surface 42 tangentially.

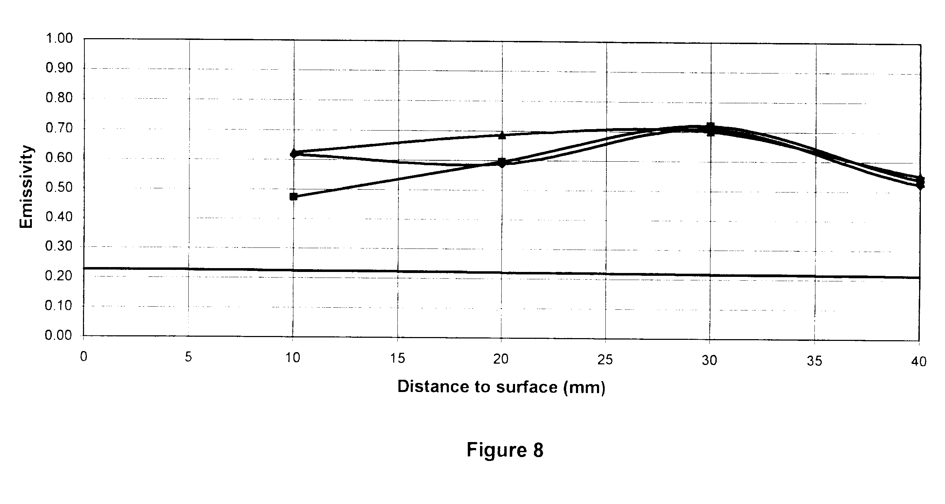

Figure 8 illustrates graphically the results of some tests. A line 50 indicates the variation in detected emissivity with distance from the target of an arrangement similar to that shown in Figure 1 with the optical axis of the hyperbola normal to the target surface and with the hyperbola optimised for a distance between the aperture and the target surface of 30mm.

A line 51 illustrates the variation in emissivity with aperture/target surface distance when the same hyperbolic surface is tilted at 5° to the normal as shown in Figure 5 ($\alpha = 5°$). A line 52 illustrates the same hyperbolic surface but with a 10° tilt ($\alpha = 10°$). It can be seen that the 10° tilt is most tolerant to variations in the reflector (aperture)/target surface distance.

For comparison purposes, a line 53 indicates the signal obtained from the surface without any reflector.

In practice, the degree of tilt or offset of the aperture 15 will be determined depending upon the expected divergence of the emitted radiation so as to minimise the amount of radiation which passes through the aperture without reflection.

## Claims

1.    Radiation sensing apparatus comprising a substantially hyperbolically shaped radiation reflector including an aperture which faces a target surface in use; and, an apparatus for detecting the radiation transmitted through the aperture, wherein the surface profile of the hyperbolic reflector is selected in accordance with the distance of the aperture from the target.

2.    Apparatus according to claim 1, wherein the hyperbolic reflector further comprises a flange mounted to the reflector perimeter.

3.    Apparatus according to claim 1 or claim 2, wherein the detection apparatus is an infrared thermometer.

4.    Apparatus according to any of the preceding claims, wherein the aperture is offset from the optical axis of the reflector.

5.    Apparatus according to any of the preceding claims, wherein the optical axis of the reflector is tilted about its centre with respect to a normal to the target surface, in use.

6.    Apparatus according to any of the preceding claims, the apparatus further comprising a coupling tube for removably mounting the radiation reflector to the detecting apparatus, wherein the radiation transmitted through the aperture passes through the coupling tube.

7.    Apparatus according to any of claims 1 to 5, further comprising a fibre optic guide for collecting radiation passing through the aperture and conveying the radiation to the detecting apparatus located remotely from the reflector.

8. A method of monitoring radiation emitted by a target, the method comprising providing apparatus according to any of the preceding claims; and locating the reflector relative to the target so that radiation emitted by the target is reflected towards the aperture.

9. A method according to claim 8, wherein the aperture is located relative to the target such that a radiation beam passing through the aperture and then impinging on the target is not specularly reflected back to the aperture.

Figure 1

Figure 2

Figure 3.

Figure 4

α

15

30

31

13

FIG 5

32    20

θ

30

15

13'

FIG 6

32    20

FIG 7

Figure 8

European Patent Office

# EUROPEAN SEARCH REPORT

Application Number

EP 99 30 0269

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | V.M. FARMER: "UNUSUAL DESIGN CONSIDERATIONS FOR OPTICAL COMPONENTS" INFRARED PHYSICS, vol. 8, 1968, pages 59-63, XP002081877 GREAT BRITAIN * figure 2 * | 1,8 | G01J5/08 |
| A | AVDOSHIN E S: "INFRARED RADIOMETERS WITH LIGHT GUIDES (SURVEY)" INSTRUMENTS AND EXPERIMENTAL TECHNIQUES, NEW YORK, NY, US, vol. 31, no. 2, PART 01, March 1988, pages 261-282, XP000001546 * page 275 - page 279; figures 15-18 * | 1-4,6-9 | |
| A | PATENT ABSTRACTS OF JAPAN vol. 010, no. 215 (P-481), 26 July 1986 -& JP 61 054417 A (NEW JAPAN RADIO CO LTD), 18 March 1986 * abstract * | 1,6-8 | |
| A | AU 535 987 B (INST LITYA AKADEMII NAUK UK SS) 12 April 1984 * page 14, paragraph 2; figure 2 * | 1,8 | TECHNICAL FIELDS SEARCHED (Int.Cl.6) G01J G01N |
| A | PAOLO CIELO ET AL: "CONICAL-CAVITY FIBER OPTIC SENSOR FOR TEMPERATURE MEASUREMENT IN A STEEL FURNACE" OPTICAL ENGINEERING, vol. 32, no. 3, 1 March 1993, pages 486-492, XP000356199 * the whole document * | 1,4,8,9 | |
| A | US 5 227 632 A (ARMSTRONG DOUGLAS S ET AL) 13 July 1993 * column 4, line 30; figures * | 1,8 | |

-/--

The present search report has been drawn up for all claims

| Place of search | Date of completion of the search | Examiner |
|---|---|---|
| THE HAGUE | 25 March 1999 | Ramboer, P |

## EUROPEAN SEARCH REPORT

European Patent
Office

Application Number

EP 99 30 0269

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 501 969 A (LYMNEOS ANTHONY C) 26 February 1985 * column 4, line 9; figures * | 1,8 | |

TECHNICAL FIELDS SEARCHED (Int.Cl.6)

The present search report has been drawn up for all claims

| Place of search | Date of completion of the search | Examiner |
|---|---|---|
| THE HAGUE | 25 March 1999 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 0269

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-1999

| Patent document cited in search report | | Publication date | Patent family member(s) | | Publication date |
|---|---|---|---|---|---|
| AU 535987 | B | 12-04-1984 | AU | 6459280 A | 27-05-1982 |
| US 5227632 | A | 13-07-1993 | NONE | | |
| US 4501969 | A | 26-02-1985 | NONE | | |

EPO FORM P0459